(19) Europäisches Patentamt
European Patent Office
Office européen des brevets

(11) **EP 4 604 412 A1**

(12) **EUROPEAN PATENT APPLICATION**

(43) Date of publication:
**20.08.2025 Bulletin 2025/34**

(21) Application number: **24158399.6**

(22) Date of filing: **19.02.2024**

(51) International Patent Classification (IPC):
*H04B 7/06* *(2006.01)*     *H04L 5/00* *(2006.01)*

(52) Cooperative Patent Classification (CPC):
**H04B 7/0632; H04B 7/06952; H04B 7/06968;
H04L 5/0048;** H04L 5/0023

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Panasonic Intellectual Property
Corporation
of America
Torrance, CA 90504 (US)**

(72) Inventors:
• **ZEINEDDINE, Khalid
63225 Langen (DE)**
• **SUZUKI, Hidetoshi
Osaka, 571-8501 (JP)**

(74) Representative: **Grünecker Patent- und
Rechtsanwälte
PartG mbB
Leopoldstraße 4
80802 München (DE)**

(54) **USER EQUIPMENT PARTICIPATING IN A BEAM MANAGEMENT PROCEDURE**

(57) The present disclosure relates to a user equipment comprising the following. Processing circuitry of the UE determines a set of one or more downlink reference signals. The processing circuitry measures the downlink reference signals from the determined set. The processing circuitry determines a quality of the downlink signal reception based on the measured downlink reference signals. The processing circuitry determines whether to initiate a beam management report procedure based on the determined downlink signal reception quality.

Fig. 8

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved beam management procedure.

In an embodiment, the techniques disclosed here feature a user equipment comprising the following. Processing circuitry of the UE determines a set of one or more downlink reference signals. The processing circuitry measures the downlink reference signals from the determined set. The processing circuitry determines a quality of the downlink signal reception based on the measured downlink reference signals. The processing circuitry determines whether to initiate a beam management report procedure based on the determined downlink signal reception quality.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.

| | |
|---|---|
| **Fig. 1** | shows an exemplary architecture for a 3GPP NR system to which the improved procedures of the present disclosure may be applied; |
| **Fig. 2** | shows exemplary functional split options in 5G O-RAN, |
| **Fig. 3** | illustrates a simplified and exemplary implementation of a set of synchronization signal blocks distributed in a half-frame, |
| **Fig. 4** | illustrates several beams and the corresponding SSB index, SSB1-SSB8, and how the beams are transmitted by the gNB in a beam-sweeping manner, |
| **Fig. 5** | illustrates a signaling diagram for CSI measurement and reporting, |
| **Fig. 6** | illustrates an exemplary and simplified structure of a UE and a gNB, |
| **Fig. 7** | illustrates a structure of the UE according to an exemplary implementation of the improved beam management procedure, |
| **Fig. 8** | illustrates a flow diagram for the UE behavior according to an exemplary implementation of the improved beam management procedure, and |
| **Fig. 9** | is a signaling diagram illustrating an exemplary exchange between the UE and the gNB for an exemplary implementation of the improved beam management procedure. |

**DETAILED DESCRIPTION**

*5G NR system architecture and protocol stacks*

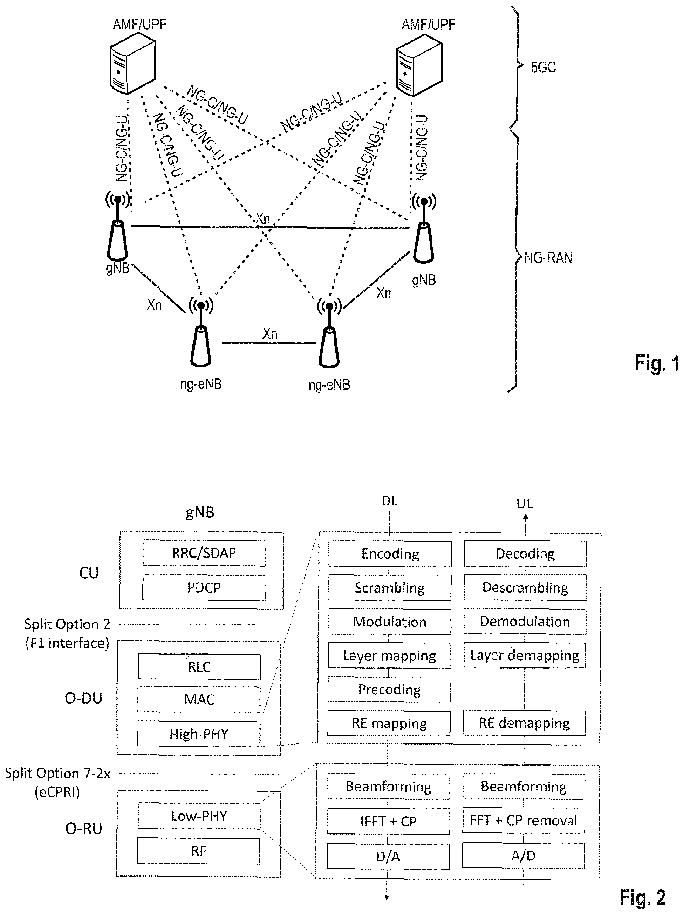

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.0.0, section 4).

*RRC connection setup and reconfiguration procedures*

Interactions between a UE, gNB, and AMF (a 5GC entity) in the context of a transition of the UE from RRC_IDLE to RRC_CONNECTED for the NAS part are described (see 3GPP TS 38.300).
RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.
In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.
For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

*Open-RAN*

The base station described in each exemplary embodiment (for example, a 5G NR base station called gNB) may be formed of three functional modules: Centralized Unit (CU), Distributed Unit (DU), and Radio Unit (RU).
CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.
Several split options are defined for the functional split configuration (or functional split point) between CU, DU, and RU. The term "functional split point" may also be referred to as "split", "option", or "split option".
Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.

(1) Split Option 1: between RRC (radio resource control) and PDCP

(2) Split Option 2: between PDCP and RLC (High-RLC)

(3) Split Option 3: between High-RLC and Low-RLC

(4) Split Option 4: between RLC (Low-RLC) and MAC (High-MAC)

(5) Split Option 5: between High-MAC and Low-MAC

(6) Split Option 6: between MAC (Low-MAC) and PHY (High-PHY)

(7) Split Option 7: between High-PHY and Low-PHY

(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

FIG. 2 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

*Subband non-overlapping full duplex - SBFD*

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, subbandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

*XDD - Cross Division Duplex*

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

*Synchronization Signal Block measurement timing configuration - SMTC - PSS/SSS, PBCH*

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence.

Information on the current exemplary 5G implementation of the PSS and SSS is available from 3GPP TS 38.211 v17.6.0 sections 7.4.2.2 and 7.4.2.3 (see also TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

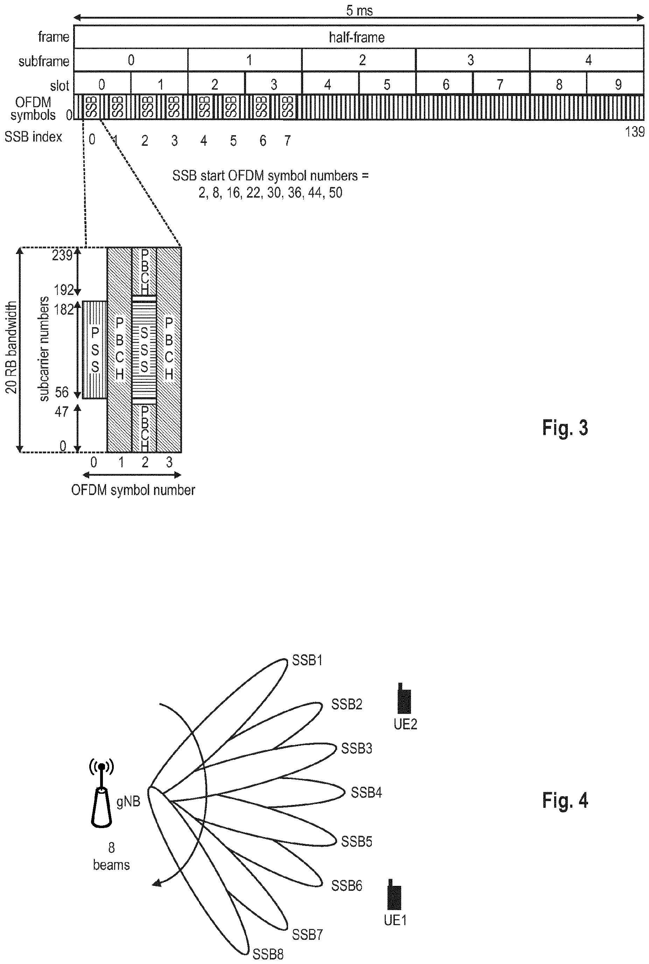

A simplified and exemplary illustration of the SSB according to the above definitions is illustrated in Fig. 3, which shows at the bottom part the PSS, SSS, and PBCH in the time and frequency domain.

The SSB set illustrated in Fig. 3 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

All the SSBs can be transmitted with all beams in the system. Alternatively, the SSBs can be transmitted in different beams, e.g. when SSB beamforming is enabled. In that case, each SSB is transmitted on a different spatial beam, as illustrated in Fig. 4. Similar to the exemplary assumption of Fig. 3, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

*Reference Signals*

Several different types of reference signals (RS) are used for 5G NR (see 3GPP TS 38.211 v18.1.0 section 7.4.1). At least the following reference signals are available in 5G NR:

- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0, e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

*Beam management*

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:

- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig,* with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

*Initial beam establishment*

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 3). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

*Beam adjustment*

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

*Beam failure recovery*

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:

- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

*Beam measurement and reporting*

General operations performed during one or more of said above main procedures may involve one or more of:

- *beam sweeping*, i.e., covering a spatial area with a set of beams transmitted and received according to pre-specified intervals and directions,

- *beam measurement*, i.e., the evaluation of the quality of the received (beam) signal at the gNB or at the UE,
- *beam determination*, i.e., the selection of the suitable beam or beams either at the gNB or at the UE, according to measurements obtained with the beam measurement procedure, and
- *beam reporting*, i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

*Channel State Information measurement and reporting framework*

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:

1) List of RS resource sets

- Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the IEs *CSI-IM-Resource,* and *SSB-Index.*

2) List of *CSI-ResourceConfig* I Es

- Different *CSI-ResourceConfig* in the list can contain one or more different RS resource sets, chosen from List element 1). This may include NZP-CSI-RS-*ResourceSet*, *CSI-IM-ResourceSet*, and/or *CSI-SSB-ResourceSet*, respectively identified by suitable IDs (see e.g. *NZP-CSI-RS-ResourceSetId*, *CSI-IM-ResourceSetId*, and/or *CSI-SSB-ResourceSetId*)

3) List of CSI-ReportConfig IEs.

- Different *CSI-ReportConfig* in the list configure different CSI report instances. This is the Information Element which links the reporting configuration of this CSI-*ReportConfig* (such as by PUCCH or PUSCH) to the measurement resource sets (i.e. one *CSI-ResourceConfig* in the above List element 2). *CSI-ResourceConfigID*, being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:

- CQI (Channel Quality Information),
- PMI (Precoding Matrix Indicator),
- CRI (CSI-RS Resource Indicator),

- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:

- L1-RSRP-related quantities (e.g. cri-RSRP and ssb-Index-RSRP, see later IE *CSI-Report Config*)
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE): *CellGroupConfig, CSI-MeasConfig, CSI-ReportConfig, CSI-ResourceConfig, NZP-CSI-RS-Resource*, and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of IEs for defining measurement and report according to the CSI framework is presented in the following:

- *CellGroupConfig* IE

  ○ the *ServingCellConfig* IE of *SpCellConfig* or of *SCellConfig*

    ▪ *CSI-MeasConfig* IE

    • *CSI-ResourceConfig* IE

      ○ *NZP-CSI-RS-ResourceSet*

        ▪ *NZP-CSI-RS-Resource*

      ○ *CSI-SSB-ResourceSet*

        ▪ *SSB-Index*

      ○ *CSI-IM-ResourceSet*

        ▪ *CSI-IM-Resource*

    • *CSI-ReportConfig* IE

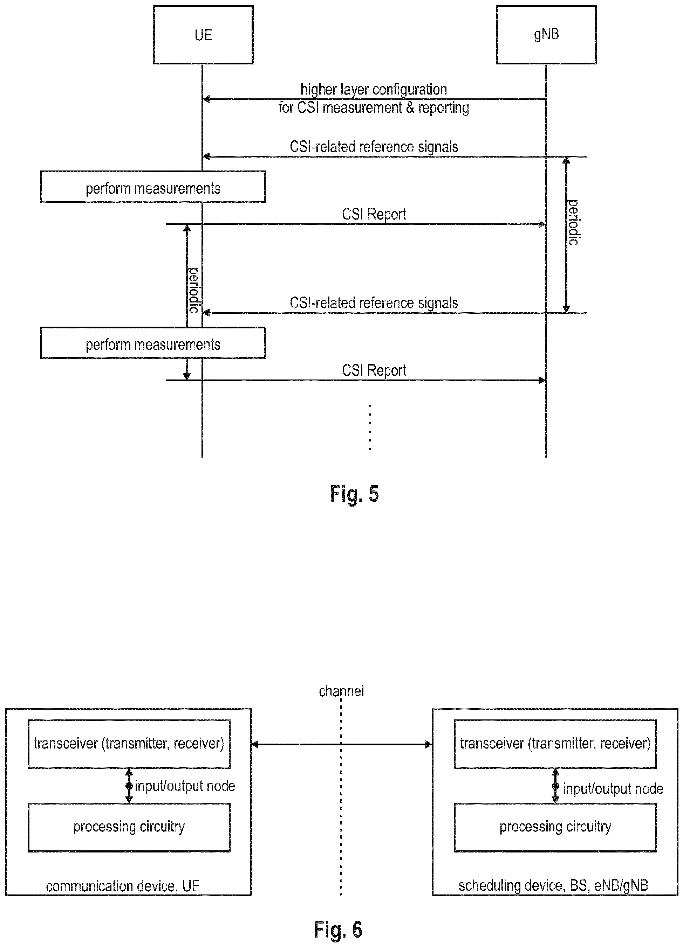

**Fig. 5** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

*Transmission Configuration Indicator (TCI) states*

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:

- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:

- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field "*Transmission Configuration Indication*".
- Step 3: One out of the 8 activated TCI states is then actually used by the UE to receive a target channel/signal. For example, the UE receives a DCI signal, which indicates one of the codepoints in the DCI field "*Transmission Configuration Indication*". The UE applies the indicated codepoint to the target channel(s) or target signal(s).

*Configuration of TCI states (TCI Configuration)*

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DL/UL operation) as follows:

**TCI-State information element**

```
-- ASN1START
-- TAG-TCI-STATE-START
TCI-State ::=                    SEQUENCE {
    tci-StateId                     TCI-StateId,
    qcl-Type1                       QCL-Info,
    qcl-Type2                       QCL-Info                        OPTIONAL, -- Need R
    ...,

    [[
    additionalPCI-r17               AdditionalPCIIndex-r17          OPTIONAL, -- Need R
    pathlossReferenceRS-Id-r17      PUSCH-PathlossReferenceRS-Id-r17  OPTIONAL, -- Cond JointTCI1
    ul-powerControl-r17             Uplink-powerControlId-r17       OPTIONAL  -- Cond JointTCI
    ]]
}
QCL-Info ::=                    SEQUENCE {
    cell                            ServCellIndex           OPTIONAL,  -- Need R
    bwp-Id                          BWP-Id                  OPTIONAL, -- Cond CSI-RS-Indicated
    referenceSignal                 CHOICE {
        csi-rs                          NZP-CSI-RS-ResourceId,
        ssb                             SSB-Index
    },
    qcl-Type                        ENUMERATED {typeA, typeB, typeC, typeD},
    ...
}
-- TAG-TCI-STATE-STOP
-- ASN1STOP
```

| ***QCL-Info* field descriptions** |
|---|
| ***bwp-Id*** <br> The DL BWP which the RS is located in. If the field is absent, the RS is located in the DL BWP in which the *TCI-State* is applied by the UE. |
| ***cell*** <br> The UE's serving cell in which the *referenceSignal* is configured. If the field is absent, the *referenceSignal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referencesignal* is set to *csi-rs* and *unifiedTCI-State Type* is configured, either both *cell* and *bwp-Id* are present or both *cell* and *bwp-Id* are absent. See TS 38.214 [19] clause 5.1.5. |
| ***referenceSignal*** <br> Reference signal with which quasi-collocation information is provided as specified in TS 38.214 [19] clause 5.1.5. |
| ***qcl-Type*** <br> QCL type as specified in TS 38.214 [19] clause 5.1.5. |
| ***TCI-State* field descriptions** |
| ***additionalPCI*** <br> Indicates the physical cell IDs (PCI) of the SSBs when *referenceSignal* is configured as SSB for both QCL-Type1 and QCL-Type2. In case the cell is present, the *additionalPCI* refers to a PCI value configured in the list configured using *additionalPCI-ToAddModList* in the serving cell indicated by the field cell. Otherwise, it refers to a PCI value configured in a list *additionalPCI- ToAddModList* configured in the serving cell where the *TCI-State* is applied by the UE. When this field is present the *cell* for *qcl-Type1* and *qcl-Type2* is configured with same value, if present. |

(continued)

| TCI-State field descriptions |
|---|
| **pathlossReferenceRS-Id**<br>The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| **qcl-Type1, qcl-Type2**<br>QCL information for the TCI state as specified in TS 38.214 [19] clause 5.1.5. |
| **tci-StateId**<br>ID number of the TCI state. |
| **ul-PowerControl**<br>Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| Conditional Presence | Explanation |
|---|---|
| CSI-RS-Indicated | This field is mandatory present if *csi-rs* is included and *unifiedTCI-State Type* is not configured. This field is optionally present, Need R, if *csi-rs* is included and *unifiedTCI-State-Type* is configured. Otherwise, it is absent, Need R. |
| JointTCI | This field is optionally present, Need R, if this serving cell is configured with *unifiedTCI-State Type* set to 'joint'. It is absent, Need R, otherwise. |
| JointTCI1 | This field is mandatory present, if this serving cell is configured with unifiedTCI-StateType set to 'joint'. It is absent, Need R, otherwise. |

For the uplink, the information element *TCI-UL-State* is defined in 3GPP TS 38.331, section 6.3.2.

*3GPP Release 19 MIMO evolution - UE-initiated / event driven beam management*

As presented above, the network may configure periodic or semi-persistent beam reporting or trigger aperiodic beam reporting for the purpose of timely acquiring a best/preferred beam for data / control transmissions. This may result in large uplink reporting overhead and control signaling overhead in addition to reporting latency. Due to the network-configured nature of the beam reporting, the reporting latency caused by the periodic or semi-persistent beam reporting or triggered aperiodic beam reporting may also result in unnecessarily prolonged periods of communication between UE and network using beams that may have degraded unexpectedly. This might even result in beam failures, which then results in that the UE has to perform a beam failure detection and recovery procedure, rather than performing a simple beam switch in a timely manner. This is inefficient, and further, retransmissions of data might be required in addition to the incurred latency of the recovery procedure

Given that the UE has better and more-timely knowledge of beam quality changes, beam reporting procedures that are initiated by the UE have the potential to lead to more timely beam reports together with reduced reporting overhead and preventing prolonged degraded communication quality.

Consequently, there is a need to specify enhancements to facilitate UE-initiated / event-driven beam management procedures for reducing overhead and/or reporting latency. For such a UE-initiated beam reporting procedure, for the UE to know about the beam-quality change and about when to initiate beam reporting, the UE can perform measurements on DL reference signals. Based on these measurements, the UE can detect whether a UE-initiated beam reporting is needed or not.

*Further Improvements*

The inventors thus identified the possibility to define an improved beam management procedure to avoid one or more of the above described disadvantages. The present invention relates to different solutions and variants for such an improved beam management procedure, in one example an improved UE-initiated beam management procedure.

Beam management procedures will play an important roles in 6G communication systems, which are expected to operate in the higher frequency ranges (7-24 GHZ, FR2 range, Terahertz range).

*Embodiments*

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression "**a set of one or more downlink reference signals**" can be broadly understood as referring directly to the "one or more downlink reference signals". An alternative expression is "a list of one or more downlink reference signals". In the following explanation, this downlink reference signal set is sometimes exemplarily named "SetO" for brevity.

The expression "**reception quality**" or "**downlink signal reception quality**" can be broadly understood as referring to a quality of reception at the UE. It thus reflects the quality of reception at the UE side (i.e. downlink), which is determined by measuring suitable downlink reference signals (such as SSB, CSI-RS, DMRS etc.). The thus measured downlink signal reception quality can e.g. be used as a quality measure for the ability of the UE to receive a downlink channel, such as a downlink control channel or downlink data shared channel (PDCCH, PDSCH), e.g. even in case said downlink channel has not (yet) been received. Alternative expressions are e.g. "*downlink channel quality*", "*downlink quality*", "*quality* of a *downlink control channel*", "*quality* of a *downlink data channel*", and the like.

The expressions "**beam**" and "**downlink reference signal**" can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is "**spatial direction**", where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

The expression "**beam management report procedure" or "beam reporting procedure**" or "**UE-initiated beam reporting procedure**" and similar expressions can be broadly understood as referring to a procedure that is initiated by the UE. For instance, it may involve that, after initiation, the UE transmits a report to the base station.

The expression "**beam indicator**" can be broadly understood e.g. as an indicator of a beam direction of a reference signal transmitted by a base station in a cell, e.g. a non-serving cell. In one example, the reference signal associated with indicated beam can have a quasi co-location with another signal, to be received or transmitted by a UE. The beam indicator can be defined for use with a downlink signal, for use with an uplink signal or for joint use with both a downlink and uplink signal. The thus-indicated beam can be used by the UE for receiving or transmitting the target channel by exploiting quasi co-location characteristic(s). According to one example, the beam indicator is a TCI State according to a 3GPP telecommunication standard, such as TS 38.331, e.g. as discussed above. In the following discussion of the improved procedures and their variants, the expressions "TCI State" and "beam indicator" are equally used.

**Fig. 6** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved UE-initiated beam management procedure.

In connection with these solutions, improved UEs, improved base stations and improved integrated circuits are presented, which participate separately or together in the improved UE-initiated beam management procedures. Corresponding methods for the UE behavior and the base station behavior are provided as well. The integrated circuits may correspond to the UE and base station, and respectively their behavior.

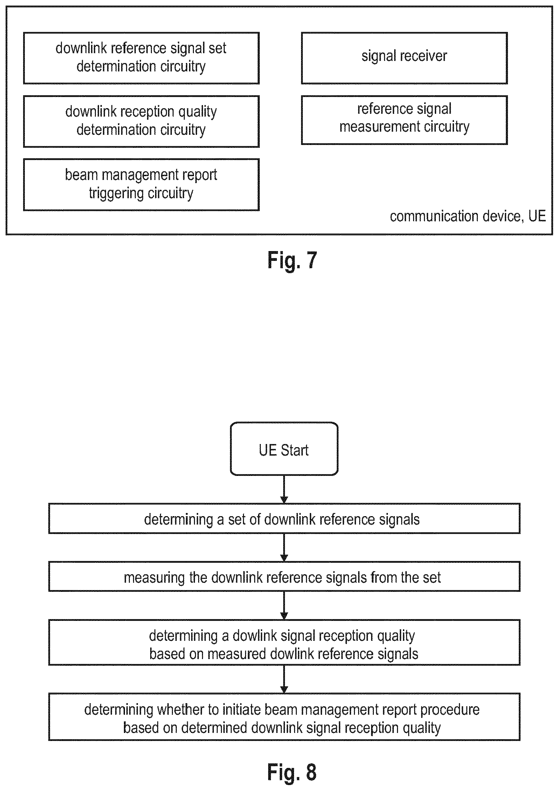

**Fig. 7** illustrates a simplified and exemplary UE structure according to a basic implementation of the improved beam management procedure presented in more detail below. In one example, the UE structure can be implemented based on the general UE structure explained in connection with Fig. 6. The various structural elements of the UE illustrated in said Fig. 7 can be interconnected between one another e.g., with corresponding input/output nodes (not shown) e.g., in order to exchange control and user data and other signals. Although not shown for illustration purposes, the UE may include further structural elements.

As apparent from Fig. 7, the UE may include a downlink reference signal set determination circuitry, downlink reception quality determination circuitry, beam management report triggering circuitry, a signal receiver and a reference signal measurement circuitry. The processing circuitry of the general UE structure of Fig. 6 can be implemented as the above downlink reference signal set determination circuitry, the downlink reception quality determination circuitry, the beam management report triggering circuitry and the reference signal measurement circuitry of Fig. 7, and can also perform further functions as will be become apparent from below. The transceiver of Fig. 6 can function as the signal receiver of Fig. 7, and can also perform further functions as will become apparent from below.

One exemplary procedure is implemented by a UE that includes the following. Processing circuitry of the UE determines a set of one or more downlink reference signals. The processing circuitry measures the downlink reference signals from the determined set. The processing circuitry determines a quality of the downlink signal reception based on the measured downlink reference signals. The processing circuitry determines whether to initiate a beam management report procedure based on the determined downlink signal reception quality.

A corresponding exemplary method comprises the following steps performed by a UE:

- determining a set of one or more downlink reference signals, usable for measuring a reception quality,
- measuring the downlink reference signals from the determined set,
- determining a quality of the downlink signal reception based on the measured downlink reference signals, and
- determining whether to initiate a beam management report procedure based on the determined downlink signal reception quality.

A corresponding sequence diagram for an exemplary UE behaviour in line with the above-discussed UE and UE method is presented in **Fig. 8**.

The above-described improved procedure at the UE facilitates achieving the objective and overcoming at least some of the drawbacks explained above. On the one hand, the improved UE-initiated beam procedure facilitates exploiting the UE's better and more timely knowledge of the beam quality changes, so as to facilitate more timely reports while at the same time reducing the reporting overhead and reporting latency. With the timely beam reporting, unnecessary periods of degraded downlink communication from the network may be reduced, resulting in network energy saving as higher energy consuming protocols such as UE initiated beam recovery procedures and network initiated retransmissions or high power transmissions of data or control signals may be avoided. Furthermore, the improved UE initiated beam management procedure provides a mechanism that enables managing/controlling the probability of false alarms being raised to the network, hence preventing any unnecessary overhead for the UE's beam adjustment or reselection.

Different and exemplary implementations of the improved beam management procedure are explained in the following. For the explanation of the different implementations, some exemplary and simplifying assumptions are made.

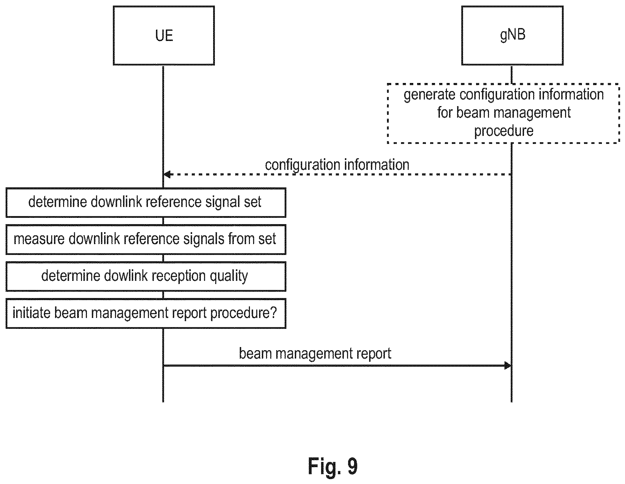

**Fig. 9** is a signaling diagram of an exemplary and simplified implementation of the improved beam management procedure, illustrating the exchange of messages between the different participating entities (here the UE and gNB) and the steps performed at these entities. The UE behaviour and gNB behaviour follow the above described UE and base station and the respective methods.

It is assumed that the UE is located in its current serving cell, controlled by the gNB (as an example of a base station), which is also responsible for the beam management for the UE. The UE and gNB may already communicate with each other, e.g. via PDCCH, PDSCH etc. The UE on the other hand assists the gNB for the beam management according to the present improved UE-initiated beam management procedure.

One optional process is that the gNB generates configuration information for the improved beam management procedure and transmits said generated configuration information to the UE (see dashed box and arrow in Fig. 9). According to different exemplary implementations (for details see below), the configuration information includes instructions for the UE on how to determine the DL reference signal set, on a threshold against which the determined downlink signal reception quality is compared, etc.

The processes at the UE side have been already explained in detail with respect to Fig. 7 and 8 above. Assuming that the UE indeed determines to initiate a beam management reporting procedure, the UE proceeds to generate and then transmit a corresponding beam management report to the gNB. Depending on the content of the beam management report, the gNB can then proceed appropriately with the beam management, e.g. initiate beam switching procedure, adjusting beam etc.

It is thus possible that the UE uses a triggering mechanism based on measurements done on a defined set of reference signals to detect e.g. a degradation of a downlink channel quality and to decide whether or not to send the network a UE-initiated beam management report.

More detailed and exemplary implementations of the improved UE-initiated beam management procedure will be explained in the following.

*<Determining the set of reference signals>*

As explained above with respect to Fig. 7, 8 and 9, the UE determines a set of one or more downlink reference signals. Exemplary implementations thereof will be explained in more detail below.

Different exemplary implementations are related to the content of the DL reference signal set, (called e.g. SetO for brevity), particularly with regard to the one or more types of reference signals within the SetO. The UE determines which DL reference signals are comprised in the SetO, to be used for measuring the quality of downlink reception.

In a first SetO implementation, SetO comprises one or more cell search signals, such as Synchronization Signal Block reference signals. In this first implementation, the SetO may not comprise other types of reference signals, i.e. but only the cell search signals. Other expressions for the cell search signals are an initial-access signals or synchronization signals. Such cell search signals are typically transmitted periodically by the gNB, such that the UE can regularly receive and measure this type of reference signal. Furthermore, cell search signals are typically transmitted anyway by the gNB, particularly for the purpose of allowing the cell search. Consequently, re-using cell-search (reference) signals for the improved beam management procedure does not require any additional downlink reference signal and thus avoids extra overhead in the downlink. On the other hand, cell search signals are typically transmitted as a wide beam, such that they are less representative of a possible quality of a downlink channel that could be transmitted in a narrow beam.

In a second SetO implementation, SetO comprises one or more UE-specific reference signals, such as Channel State Information reference signals, CSI-RS. In this second implementation, the SetO may not comprise other types of reference signals, i.e. but only the UE-specific reference signals. These UE specific reference signals are typically configured for one or more UEs, and can thus be transmitted as a narrow beam towards the UE(s) and be flexibly timed (e.g. periodic, semi-persistent and a-periodic). On the other hand, since this type of reference signal is specific to one or more UEs, this might involve an extra reference signal overhead in the downlink to allow implementing the improved beam management procedure.

In a third SetO implementation, SetO comprises one or more cell search signals as well as one or more UE-specific reference signals, i.e. a mix of the two reference signal types explained in the above first and second SetO implementations. Such a combined implementation increases the flexibility of the configuration of SetO and also facilitates balancing the advantages and disadvantages respectively connected to the first and second implementations.

In a fourth SetO implementation, SetO comprises one or more downlink demodulation reference signals, such as DM-RS, relating to a downlink control channel (such as a Physical Downlink Control Channel, PDCCH). A demodulation reference signal relating to a downlink control channel is transmitted together with the downlink control channel and thus has the benefit of allowing to measure the quality of the actual downlink transmission. On the other hand, using DM-RS has the disadvantage that the DM-RSs are not always available but only when the downlink control channel is actually transmitted; further, an UL grant may already be present to enable network-initiated beam management reporting. Thus, in one example, the SetO may not need to comprise other types of reference signals, i.e. but only the DM-RS which allow an excellent measure of the quality of the downlink channel. Alternatively, however, other types of reference signals, such as the cell-search signals and/or UE-specific reference signals, could be also included in the SetO, together with the DM-RS.

According to an exemplary 3GPP-compliant implementation of the improved beam management procedure, the above noted cell-search signal is an SSB, the above UE-specific reference signal is a CSI-RS, and the downlink demodulation reference signal is a PDCCH DMRS from the 3GPP telecommunication systems (see e.g. above explanations in sections "Synchronization Signal Block measurement timing configuration - SMTC - PSS/SSS, PBCH" and "Reference Signals").

Different exemplary implementations are related to how the UE determines the SetO. In the following, two different implementations will be explained, one according to which the UE performs the determination based on configuration information that is received from the gNB and another according to which the UE performs the determination implicitly by taking into account other quasi co-located reference signals.

According to the first determination implementation, the UE performs the determination based on configuration information that is received from the gNB. In one example, the gNB configures the content of the SetO, specifically for the purpose of the improved UE-initiated beam management procedure. Put differently, SetO is configured in addition to any other set(s) of reference signals that might be configured by the gNB for other purpose. For instance, the configuration of the set can include global identifiers or global indices to point to the reference signals that can be used for the purpose of the improved UE-initiated beam management procedure. For instance, the configuration information may be higher-layer configuration information. According to an exemplary, 3GPP-compliant, variant, the higher-layer configuration information can be according to the RRC protocol. According to an exemplary, 3GPP-compliant, variant, the reference signal identifier can be an SSB-index or a CSI-RS resource set ID.

Further, the gNB may be responsible for keeping the SetO up to date, and to said end might regularly transmit suitable configuration information to the UE, e.g. after having switched to another DL/UL beam for the UE (e.g. in response to the UE-initiated beam management report).

According to the second determination implementation, the UE performs the determination implicitly by taking into account quasi co-location relationships with other reference signals, and can be implemented, e.g. as follows. The UE first determines downlink reference signals that are quasi co-located with a downlink demodulation reference signal relating to a downlink control channel, and then generates the set of downlink reference signals (SetO) to include one or more of those quasi co-located downlink reference signals. In this implementation, it assumed that the reference signal on which matching QCL relationships with other reference signals is based (briefly termed e.g. "source reference signal" for the quasi co-location) is the downlink demodulation reference signal of the downlink control channel (e.g. DM-RS of PDCCH), because the downlink control channel can be regarded as an important channel the UE has to be receiving properly. The improved beam management procedure is however not limited in said respect. In other examples, another source reference signal can be defined for the quasi co-location, such as the downlink demodulation reference signal of the downlink data channel (e.g. DM-RS of the PDSCH).

It is assumed that the UE is able to receive numerous different reference signals, and among all of those reference signals that the UE receives, the UE then determines those that are quasi co-located with the source downlink reference signal (e.g. the DM-RS of the downlink control channel).

In one example, the type of quasi co-location, used for determining the quasi co-located reference signals comprising the SetO, relates to using a same or similar spatial filter as the source reference signal (here e.g. the DM-RS of the downlink control channel). In other words, the UE identifies a downlink reference signal to be quasi co-located when it has been transmitted using a same or similar spatial filter as the downlink demodulation reference signal of the downlink control channel. The spatial filter quasi co-location reflects the direction of the beam. Other types of quasi co-location, such as having a same/similar Doppler shift, Doppler spread, average delay, and/or delay spread, between reference signals, are of less relevance than the spatial direction.

According to further examples, the quasi co-location required for reference signals of the SetO can be defined in advance (e.g. by the gNB or as part of a standard specification), such that the UE is aware of how to identify the quasi co-located reference signals for SetO. This facilitates reducing the configuration overhead in the downlink.

In a further example, the quasi co-location can be implemented by using a beam indicator that relates to the downlink control channel. In one example, the beam indicator can be generated by the gNB and then transmitted to the UE. Said beam indicator may indicate one or more downlink reference signals, such as the above-mentioned source reference signal (the DM-RS of the downlink control channel). The beam indicator might also indicate a type of quasi co-location of the indicated source reference signal, in this case e.g. the spatial direction type. In brief, the UE receives and then considers the beam indicator transmitted for the DM-RS of the downlink control channel (as the source reference signal), when determining which reference signals are to be determined as part of SetO.

Providing a mechanism under control of the gNB increases the flexibility of the improved beam management procedure. By transmitting only the beam indicator to the UE, the configuration overhead can be reduced, e.g. compared to the above first implementation, particularly where configuration information directly configures the complete SetO as such.

A further exemplary consideration of the UE when implicitly determining the SetO according to this second implementation, is which one or more types of reference signals the SetO is supposed to include. For instance, as explained above in the first to fourth implementations, the SetO may include cell search signals, and/or UE-specific reference signals, or demodulation reference signals of the PDCCH. For instance, the UE might perform the quasi co-location determination only among the cell search signals (e.g. SSBs) it is receiving, or only among the UE-specific reference signals (e.g. CSI-RSs) it is receiving, or among both cell search signals and UE-specific reference signals it is receiving.

For an exemplary 3GPP-compliant implementation (see e.g. 3GPP TS 38.331 as presented above), the above noted beam indicator can be a *TCI-State* of the downlink. The content of the Transmission Configuration Indication, TCI, State, is defined in the corresponding information element *TCI-State*. Further, the 3GPP mechanism for configuring and activating a TCI State can also be re-used for the improved beam management reporting procedure, particularly including configuring a list of TCI states (e.g. by RRC), activating a subset of TCI states (e.g. by MAC CE) and selecting a particular TCI State among the activated subset of TCI states (e.g. by DCI) (further details see above section "Transmission Configuration Indicator (TCI) states").

In any case, the UE determines a set SetO of downlink reference signals $RS_i$, for further processing, wherein the parameter i indicates one of downlink reference signals in the set.

*<Measuring downlink reference signals>*

As explained above with respect to Fig. 7, 8 and 9, the UE measures the downlink reference signals from the determined set, SetO. Exemplary implementations thereof will be explained in more detail below.

The downlink reference signals are measured so as to obtain a quality metric for each of the downlink reference signals. For instance, the quality metric is one or more of:

- a reference signal received power, RSRP, measurement value of the respective downlink reference signal, and
- a signal to interference plus noise ratio, SINR, measurement value of the respective downlink reference signal.

Correspondingly, in one example, the measurement results for the set may comprise only the RSRP quality metric for all downlink reference signals. The RSRP quality metric is robust and simple to determine, however does not provide any interference information.

Alternatively, in another example, the measurement results for the set may comprise only the SINR quality metric for all downlink reference signals. The SINR quality metric is advantageous in that it provides interference information but is more complicated for the UE to measure.

Alternatively, in still another example, the measurement results for the set may comprise either the RSRP quality metric or the SINR quality metric for each of the downlink reference signals. For instance, the SSB can be measured to obtain the RSRP, whereas the CSI-RS are measured to obtain the SINR. This alternative has the greater flexibility on how to characterize the channel quality.

Alternatively, in still a further example, the measurement results for the set may comprise both the RSRP quality metric and the SINR quality metric for each of the downlink reference signals. For instance, both the SSB and CSI-RS can be measured to obtain both the RSRP and SINR for each of the downlink reference signals. This alternative has the greater clarity on characterizing the channel quality to understand both the downlink signal strength and the interference information of the downlink reception.

The UE thus determines a quality metric (may also be called performance metric, PM) for each downlink reference signal of the set: PM ($RS_i$), wherein the PM ($RS_i$) = RSRP ($RS_i$) or SINR ($RS_i$).

*<Determining quality of downlink signal reception>*

As explained above with respect to Fig. 7, 8 and 9, the UE determines a quality of the downlink signal reception based on the measured downlink reference signals. Exemplary implementations thereof will be explained in more detail below.

In one exemplary implementation, the determining of the downlink signal reception quality comprises determining the downlink signal reception quality as a function of the determined quality metric of the downlink reference signals. As discussed above, the measurement process at the UE results in a quality metric for each downlink reference signal of the determined set. Rather than considering each quality metric separately, the improved beam management procedure can determine a combined quality metric from all the available quality metrics based on a function. The downlink signal reception quality, DL-Q, is a function of the quality metrics PM($RS_i$):

$$DL\text{-}Q = \text{function } (PM(RS_i)), \qquad i=1,\ldots, Nr_{Set0}$$

The $Nr_{Set0}$ denotes the total number of reference signals in the set, SetO.

There are several different exemplary implementations of the function to determine the downlink signal reception quality. For instance, the function can be one of:

- determining best one among the determined quality metrics,
- determining worst one among the determined quality metrics,
- determining an average or median across the determined quality metrics, and
- determining a ratio of the best and worst ones among the determined quality metrics.

The above are just a few examples of possible functions.

Another example would be to use a logical expression as a condition, such as RSRP of RS1 < threshold1 and SINR of RS2 < threshold2, to arrive at a boolean result (e.g. 1).

In any case, however, the UE determines an overall quality metric for the quality of the downlink signal reception.

*<Initiate beam management report procedure >*

As explained above with respect to Fig. 7, 8 and 9, the UE determines whether to initiate a beam management report procedure, based on the determined downlink signal reception quality. Exemplary implementations thereof will be explained in more detail below.

After the UE determines the overall downlink signal reception quality, as explained above, the UE proceeds to determine whether to initiate the beam management report procedure, which comprises determining to initiate the beam management report procedure when one or a combination of trigger conditions is fulfilled. Said trigger condition can be one or more of:

A. in case the downlink signal reception quality is below a low-quality threshold,

B. in case the downlink signal reception quality is below a low-quality threshold for a minimum amount of time,

C. in case the downlink signal reception quality is below a low-quality threshold for a minimum number of times,

D. in case the downlink signal reception quality is below a low-quality threshold for a minimum number of times within a maximum amount of time.

The above trigger conditions A-D for initiating the measurement report procedure can be implemented for instance as follows.

With regard to trigger condition A, for instance, the UE determines that when the downlink signal reception quality (see above DL-Q) calculated on SetO falls below a threshold denoted as thresh-Q, the UE determines it needs to initiate a beam management reporting to the gNB. As apparent, trigger condition A provides a simple trigger mechanism, with the threshold level controlling the probability of false alarms.

With regard to trigger condition B, for instance, the UE determines that when the downlink signal reception quality (see above DL-Q) calculated on SetO falls below a threshold denoted as *thresh*-Q, the UE starts a countdown *beam-timer.* If the countdown *beam-timer* reaches zero and the quality DL-Q is still below the threshold *thresh-Q*, the UE determines it needs to initiate a beam management reporting to the gNB and the countdown timer is reset to initial value. As apparent, trigger condition B expands on trigger condition A and incorporates a simple hysteresis feature based on a time mechanism that allows, based on the threshold levels, to control the probability of the false alarms.

With regard to trigger condition C, for instance, the UE determines that when the downlink signal reception quality (see above DL-Q) calculated on SetO falls below a threshold denoted as thresh-Q, the UE increases a *beam-counter* by 1. If the *beam-counter* reaches the threshold value F (where F≥1), the UE determines it needs to initiate a beam management reporting to the gNB and the counter is reset to zero. As apparent, trigger condition C expands on trigger condition A and incorporates a simple hysteresis feature based on a counting mechanism that allows to control the probability of the false alarms.

With regard to trigger condition D, for instance, the UE determines that when the downlink signal reception quality (see above DL-Q) calculated on SetO falls below a threshold denoted as thresh-Q, the UE starts a timer *beam-timer* and increases a *beam-counter* by 1. The UE measures the DL channel quality with a certain periodicity and if the counter reaches the threshold value F (where F≥1) before the timer beam-timer expires, the UE determines it needs to initiate a beam management reporting to the gNB. Otherwise, both timer and counter are reset to zero. As apparent, trigger condition D expands on trigger condition A and in fact represents a combination of the hysteresis mechanism of trigger conditions B and C, and thus provides a more elaborate hysteresis mechanism that allows to further control the probability if the false alarms.

The above trigger mechanism, or part of it, can be e.g. configured in advance at the UE (e.g. by a gNB or as part of a standard specification). For instance, one or more of the low-quality threshold (thresh-Q), the value of the beam-timer, the value of the beam-counter can be configured in advance at the UE.

As another option, the trigger mechanism can depend on the capability of a UE, such as the processing capability. The UE can thus determine configuration parameters of the trigger mechanism (such as the above-mentioned low-quality threshold, beam-timer, beam-counter) based on its own capability. Furthermore, in one example, the UE capability or the configuration parameters of the trigger mechanism can be transmitted from the UE to the base station, which allows the gNB to know how the UE operates.

*First Variant - Beam Management Report*

As explained above with respect to Fig. 9, the UE may transmit a beam management report to the gNB, in case it determines to initiate a beam management report procedure. Exemplary implementations thereof will be explained in more detail below.

In the above, it was described that the beam management report includes information for facilitating the gNB with the beam management procedure. There are several possible and exemplary implementations of the beam management report.

For example, the beam management report comprises one or more of the following:

- a flag indicating that the quality of the downlink signal reception is bad,
- information about detected beams,
- at least part of the measured downlink reference signals,
- the determined downlink signal reception quality, and
- an identification of a preferred beam.

Each of the above content examples of the beam management report assists the gNB with the beam management procedure with respect to the UE. Beam management may generally comprise beam adjustment and beam switching, so as to facilitate maintaining an optimal DL beam for the UE.

For instance, by indicating (with a flag) that the downlink signal reception quality is bad, the gNB may trigger e.g. an aperiodic beam measurement report requesting detailed measurement results or requesting the UE to proceed with further measurements to identify a new preferred beam to switch to. By directly indicating an identification of a preferred beam, the UE can not only implicitly indicate that the current downlink signal reception is bad but already provide suitable information to the gNB about a beam to switch to. This reduces the delay of the beam switching, because there is no need for a further beam management report with further information necessary for the gNB to determine a new beam to switch to.

*Second Variant - reducing to a maximum number of downlink reference signals*

According to this second variant, the improved beam management procedure can be further improved by introducing a mechanism to reduce the processing at the UE side to a maximum number of downlink reference signals. Thereby, the necessary processing at the UE side, e.g. measurements or determining the quality metrics and overall downlink signal reception quality, can be reduced. In other words, the second variant introduces a limitation mechanism that can be applied at the UE side at different points of the improved beam management procedure.

In more detail, the UE first determines a maximum number of downlink reference signals to be processed, D, wherein $D \geq 1$. The maximum number D can be e.g. configured in advance at the UE (e.g. by a gNB or as part of a standard specification).

As another option, the maximum number D can depend on the capability of a UE, such as the processing capability. The UE can thus determine the parameter D based on its own capability. Furthermore, in one example, the UE capability or the parameter D can be transmitted from the UE to the base station.

This limitation mechanism of the second variant can be applied e.g. already when determining the set of downlink reference signals. In one example, the SetO is determined to only contain the determined maximum number of downlink reference signals. Assuming that the SetO is configured by the gNB (see first determination implementation above) and further assuming that the thus configured SetO comprises more downlink reference signals than the maximum number D, the UE can reduce the SetO to only comprise D DL reference signals at most.

Assuming that the SetO is determined implicitly by the UE based on a quasi co-location with a source reference signal (see second determination implementation above), the UE determines only D quasi co-location DL reference signals to be included in SetO. SetO thus include D downlink reference signals in total

Correspondingly, the limitation mechanism of the second variant allows to generate a downlink reference signal set of a maximum size, that can be controlled e.g. by the UE capability or a network requirement.

Applying the limitation mechanism already when determining the SetO has the advantages that the improved beam management procedure is already limited at the beginning, such that the subsequent processes are automatically limited, e.g. measurements are only performed on the limited SetO, downlink signal reception quality determination is only performed on the limited number of quality metrics, etc.

Different from the above, the limitation mechanism of the second variant can be applied when the UE measures the downlink reference signals from SetO, after the UE has determined the SetO. In more detail, while the SetO is determined without limitation, the UE may simply measure up to a maximum number D of downlink reference signals out of all downlink reference signals of the SetO. For instance, in case there are six downlink reference signals in the set SetO, the UE might only perform measurements on two out of the six downlink reference signals where the parameter D=2. Thus, the necessary measuring and processing at the UE side is reduced.

Different from the above, the limitation mechanism of the second variant can be applied to the determination of the downlink signal reception quality, after the UE has determined the SetO and measured all the downlink reference signals from SetO. In particular, the UE only takes into account the determined maximum number D of measured downlink reference signals. Correspondingly, the downlink signal reception quality function is only performed on a maximum number of D quality metrics, e.g. :

$$DL\text{-}Q = function\ (PM(RS_i)),\qquad i=1,\dots,D$$

This limitation mechanism of the second variant thus facilitates introducing a flexibility to the improved beam management procedure, according to which a varying maximum number of downlink reference signals are used for the improved beam management procedure. This allows implementing different levels of reliability that can be provided by the improved beam management procedure to trigger the transmission of a beam management report.

In the above, it was described that the UE can apply the limitation mechanism so as to select only D out of a larger number of downlink reference signals or quality metrics. There are several possibilities how the selection can be implemented, particularly which criteria the UE applies for the selection.

In a first example, the UE can select those downlink reference signal that are already available for measurement or will be available for measurement the earliest.

According to another second example, the UE can select downlink reference signals so as to have a mix of narrow-beam downlink reference signals and wide-beam downlink reference signals. For instance, when D=2, the UE might select one narrow-beam downlink reference signal and a wide-beam downlink reference signal.

According to another third example, the UE can select downlink reference signals in an increasing or decreasing order of their IDs or indices.

According to still fourth example, the UE can apply a suitable combination of two or three out of the above presented first to third examples.

*Further Variants, including Hardware and Software Implementation of the present disclosure*

In the following, variants of the present disclosure will be described.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

*Further Aspects*

According to a first aspect, a UE is provided that includes the following. Processing circuitry of the UE determines a set of one or more downlink reference signals. The processing circuitry measures the downlink reference signals from the determined set. The processing circuitry determines a quality of the downlink signal reception based on the measured downlink reference signals. The processing circuitry determines whether to initiate a beam management report procedure based on the determined downlink signal reception quality.

According to a second aspect provided in addition to the first aspect, the determined set of downlink reference signals comprises:

- one or more cell search signals, such as Synchronization Signal Block reference signals, or
- one or more UE-specific reference signals, such as Channel State Information reference signals, CSI-RS, or
- one or more cell search signals, such as Synchronization Signal Block, SSB, reference signals and one or more UE-specific reference signals, such as Channel State Information reference signals, CSI-RS, or
- one or more downlink demodulation reference signals, such as DM-RS, relating to a downlink control channel, such as a Physical Downlink Control Channel, PDCCH.

According to a third aspect provided in addition to the first or second aspect, the determining of the set of downlink reference signals is based on configuration information received from a base station. In an optional implementation, the configuration information is higher-layer configuration information, such as from a Radio Resource Control, RRC, protocol.

According to a fourth aspect, provided in addition to any one of the first to third aspects, the determining of the set of downlink reference signals comprises:

- determining downlink reference signals that are quasi co-located with a downlink demodulation reference signal relating to a downlink control channel, and
- generating the set of downlink reference signals to include one or more of those quasi co-located downlink reference signals.

In an optional implementation, the determining of the quasi co-located downlink reference signals comprises determining downlink reference signals to be quasi co-located with the downlink demodulation reference signal with regard to having been transmitted using a same or similar spatial filter.

According to a fifth aspect, provided in addition to the fourth aspect, the determining of the quasi co-located downlink reference signals is based on a beam indicator relating to the downlink control channel that comprises:

- an indication of one or more downlink reference signals, and
- a type of quasi co-location of the indicated one or more downlink reference signals with the downlink control channel.

In an optional implementation, the determining of the quasi co-located downlink reference signals comprises:

- determining, among downlink reference signals received by the UE, those downlink reference signals that are indicated by the beam indicator to be quasi co-located with the downlink control channel. Optionally, the quasi co-located downlink reference signals are those having the type of quasi co-location of having been transmitted using a same or similar spatial filter.

In an optional implementation, the beam indicator is received by the UE from the base station. In another optional implementation, the beam indicator can be a Transmission Configuration Indication, TCI, State.

According to a sixth aspect, provided in addition to any one of the first to fifth aspects, the measuring of the downlink reference signals comprises determining for each one of the downlink reference signals one quality metric. The quality metric is one or more of:

- a reference signal received power, RSRP, measurement value of the respective downlink reference signal, and
- a signal to interference plus noise ratio, SINR, measurement value of the respective downlink reference signal.

According to a seventh aspect, provided in addition to the sixth aspect, the determining of the downlink signal reception quality comprises determining the downlink signal reception quality as a function of the determined quality metric of the downlink reference signals.

In an optional implementation, the function to determine the downlink signal reception quality is one of:

- determining best one among the determined quality metrics,
- determining worst one among the determined quality metrics, and
- determining an average or median across the determined quality metrics.

According to an eighth aspect, provided in addition to any one of the first to seventh aspects, the processing circuitry determines a maximum number of downlink reference signals to be processed. Determining the set of downlink reference signals is performed such that only the determined maximum number of downlink reference signals are in the set. The measuring of the downlink reference signals is performed only for the determined maximum number of downlink reference signals. The determining of the downlink signal reception quality is performed based only on the determined maximum number of measured downlink reference signals. In an optional implementation, the determining of the maximum number of downlink reference signals is based on configuration information received from a base station or based on a capability of the UE.

According to a ninth aspect, provided in addition to any one of the first to eighth aspects, the determining whether to initiate the beam management report procedure comprises determining to initiate the beam management report procedure when a trigger condition is fulfilled. The trigger condition is one or more of:

- in case the downlink signal reception quality is below a low-quality threshold,
- in case the downlink signal reception quality is below a low-quality threshold for a minimum amount of time,
- in case the downlink signal reception quality is below a low-quality threshold for a minimum number of times,
- in case the downlink signal reception quality is below a low-quality threshold for a minimum number of times within a maximum amount of time.

In an optional implementation, the processing circuitry determines the low-quality threshold based on configuration information received from a base station or based on a capability of the UE.

According to a tenth aspect, provided in addition to any one of the first to ninth aspects, in case the processing circuitry determines to initiate the beam management report procedure, a transmitter transmits a beam management report to a base station that comprises information for facilitating beam management at the base station. In an optional implementation, the beam management report comprises one or more of the following:

- a flag indicating that the quality of the downlink signal reception is bad,
- information about detected beams,
- at least part of the measured downlink reference signals,
- the determined downlink signal reception quality, and
- an identification of a preferred beam.

In an optional implementation, the beam management comprises one or more of beam adjustment and beam switching.

According to an eleventh aspect, a method is provided comprising the following steps performed by a user equipment, UE:

determining a set of one or more downlink reference signals, usable for measuring a reception quality,

measuring the downlink reference signals from the determined set,

determining a quality of the downlink signal reception based on the measured downlink reference signals, and

determining whether to initiate a beam management report procedure based on the determined downlink signal reception quality.

According to a twelfth aspect, an integrated circuit is provided which, in operation, controls a process of a user equipment, UE, the process comprising the following steps performed by the UE:

determining a set of one or more downlink reference signals, usable for measuring a reception quality,

measuring the downlink reference signals from the determined set,

determining a quality of the downlink signal reception based on the measured downlink reference signals, and

determining whether to initiate a beam management report procedure based on the determined downlink signal reception quality.

**Claims**

1.  A user equipment, UE, comprising:

    processing circuitry, which in operation determines a set of one or more downlink reference signals,
    the processing circuitry, which in operation measures the downlink reference signals from the determined set,
    the processing circuitry, which in operation determines a quality of the downlink signal reception based on the measured downlink reference signals, and
    the processing circuitry, which in operation determines whether to initiate a beam management report procedure based on the determined downlink signal reception quality.

2.  The UE according to claim 1, wherein the determined set of downlink reference signals comprises:

    - one or more cell search signals, such as Synchronization Signal Block reference signals, or
    - one or more UE-specific reference signals, such as Channel State Information reference signals, CSI-RS, or
    - one or more cell search signals, such as Synchronization Signal Block, SSB, reference signals and one or more UE-specific reference signals, such as Channel State Information reference signals, CSI-RS, or
    - one or more downlink demodulation reference signals, such as DM-RS, relating to a downlink control channel, such as a Physical Downlink Control Channel, PDCCH.

3.  The UE according to claim 1 or 2, wherein the determining of the set of downlink reference signals is based on configuration information received from a base station,
    optionally wherein the configuration information is higher-layer configuration information, such as from a Radio Resource Control, RRC, protocol.

4.  The UE according to any one of claims 1 to 3, wherein the determining of the set of downlink reference signals comprises:

    - determining downlink reference signals that are quasi co-located with a downlink demodulation reference signal relating to a downlink control channel, and
    - generating the set of downlink reference signals to include one or more of those quasi co-located downlink reference signals,

    optionally wherein the determining of the quasi co-located downlink reference signals comprises determining downlink reference signals to be quasi co-located with the downlink demodulation reference signal with regard to having been transmitted using a same or similar spatial filter.

5.  The UE according to claim 4 , wherein the determining of the quasi co-located downlink reference signals is based on a beam indicator relating to the downlink control channel that comprises:

    - an indication of one or more downlink reference signals, and
    - a type of quasi co-location of the indicated one or more downlink reference signals with the downlink control channel,
    optionally wherein the determining of the quasi co-located downlink reference signals comprises:

- determining, among downlink reference signals received by the UE, those downlink reference signals that are indicated by the beam indicator to be quasi co-located with the downlink control channel, optionally wherein the quasi co-located downlink reference signals are those having the type of quasi co-location of having been transmitted using a same or similar spatial filter,

optionally wherein the beam indicator is received by the UE from the base station,
optionally wherein the beam indicator can be a Transmission Configuration Indication, TCI, State.

6. The UE according to any one of claims 1 to 5, wherein the measuring of the downlink reference signals comprises determining for each one of the downlink reference signals one quality metric, wherein the quality metric is one or more of:

- a reference signal received power, RSRP, measurement value of the respective downlink reference signal, and
- a signal to interference plus noise ratio, SINR, measurement value of the respective downlink reference signal.

7. The UE according to claim 6, wherein the determining of the downlink signal reception quality comprises determining the downlink signal reception quality as a function of the determined quality metric of the downlink reference signals, optionally wherein the function to determine the downlink signal reception quality is one of:

- determining best one among the determined quality metrics,
- determining worst one among the determined quality metrics, and
- determining an average or median across the determined quality metrics.

8. The UE according to any one of claims 1 to 7, wherein the processing circuitry, when in operation, determines a maximum number of downlink reference signals to be processed,

wherein determining the set of downlink reference signals is performed such that only the determined maximum number of downlink reference signals are in the set,
wherein the measuring of the downlink reference signals is performed only for the determined maximum number of downlink reference signals, and
wherein the determining of the downlink signal reception quality is performed based only on the determined maximum number of measured downlink reference signals, and
optionally wherein the determining of the maximum number of downlink reference signals is based on configuration information received from a base station or based on a capability of the UE.

9. The UE according to any one of claims 1 to 8, wherein the determining whether to initiate the beam management report procedure comprises determining to initiate the beam management report procedure when a trigger condition is fulfilled, wherein the trigger condition is one or more of:

- in case the downlink signal reception quality is below a low-quality threshold,
- in case the downlink signal reception quality is below a low-quality threshold for a minimum amount of time,
- in case the downlink signal reception quality is below a low-quality threshold for a minimum number of times,
- in case the downlink signal reception quality is below a low-quality threshold for a minimum number of times within a maximum amount of time,

optionally wherein the processing circuitry, when in operation determines the low-quality threshold based on configuration information received from a base station or based on a capability of the UE.

10. The UE according to any one of claims 1 to 9, wherein in case the processing circuitry determines to initiate the beam management report procedure, a transmitter, in operation, transmits a beam management report to a base station that comprises information for facilitating beam management at the base station,

optionally wherein the beam management report comprises one or more of the following:

- a flag indicating that the quality of the downlink signal reception is bad,
- information about detected beams,
- at least part of the measured downlink reference signals,
- the determined downlink signal reception quality, and

- an identification of a preferred beam,

optionally wherein the beam management comprises one or more of beam adjustment and beam switching.

11. A method comprising the following steps performed by a user equipment, UE:

determining a set of one or more downlink reference signals, usable for measuring a reception quality, measuring the downlink reference signals from the determined set, determining a quality of the downlink signal reception based on the measured downlink reference signals, and determining whether to initiate a beam management report procedure based on the determined downlink signal reception quality.

12. An integrated circuit, which, in operation, controls a process of a user equipment, UE, the process comprising the following steps performed by the UE:

determining a set of one or more downlink reference signals, usable for measuring a reception quality, measuring the downlink reference signals from the determined set, determining a quality of the downlink signal reception based on the measured downlink reference signals, and determining whether to initiate a beam management report procedure based on the determined downlink signal reception quality.

EP 4 604 412 A1

# EP 4 604 412 A1

**Fig. 1**

**Fig. 2**

SSB start OFDM symbol numbers =
2, 8, 16, 22, 30, 36, 44, 50

Fig. 3

Fig. 4

**Fig. 5**

**Fig. 6**

downlink reference signal set
determination circuitry

signal receiver

downlink reception quality
determination circuitry

reference signal
measurement circuitry

beam management report
triggering circuitry

communication device, UE

**Fig. 7**

UE Start

determining a set of downlink reference signals

measuring the downlink reference signals from the set

determining a dowlink signal reception quality
based on measured dowlink reference signals

determining whether to initiate beam management report procedure
based on determined downlink signal reception quality

**Fig. 8**

Fig. 9

Europäisches
Patentamt

European
Patent Office

Office européen
des brevets

# EUROPEAN SEARCH REPORT

**Application Number**

EP 24 15 8399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/033844 A1 (ERICSSON TELEFON AB L M [SE]) 15 February 2024 (2024-02-15) | 1-7,11, 12 | INV. H04B7/06 H04L5/00 |
| Y | * paragraph [0065] - paragraph [0067] * * paragraph [0104] * * paragraph [0113] - paragraph [0137] * * figures 9, 11 * | 8 | |
| X | US 2023/032501 A1 (LI HUA [US] ET AL) 2 February 2023 (2023-02-02) | 1-7,11, 12 | |
| Y | * paragraph [0018] - paragraph [0025] * * paragraph [0033] * * figure 1 * | 8 | |
| X | US 2022/132517 A1 (ZHU DALIN [US] ET AL) 28 April 2022 (2022-04-28) | 1-8,11, 12 | |
| Y | * paragraph [0133] - paragraph [0139] * * paragraph [0174] - paragraph [0175] * * paragraph [0210] * * figure 3 * | 8 | |

**TECHNICAL FIELDS SEARCHED (IPC)**

H04B
H04L

The present search report has been drawn up for all claims

| Place of search | Date of completion of the search | Examiner |
|---|---|---|
| Munich | 19 August 2024 | Toumpakaris, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 15 8399

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-8, 11, 12

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

1. claims: 1, 2, 6, 7, 11, 12

   Invention 1 comprises subinventions 1.1 and 1.2

1.1. claims: 1, 2, 11, 12

   Independent claim 1 defines a user equipment, UE, comprising: processing circuitry, which in operation determines a set of one or more downlink reference signals, the processing circuitry, which in operation measures the downlink reference signals from the determined set, the processing circuitry, which in operation determines a quality of the downlink signal reception based on the measured downlink reference signals, and the processing circuitry, which in operation determines whether to initiate a beam management report procedure based on the determined downlink signal reception quality.
   Independent claim 11 defines a corresponding method
   Dependent claim 2 defines the UE according to claim 1 wherein the determined set of downlink reference signals comprises:- one or more cell search signals, such as Synchronization Signal Block reference signals, or- one or more UE-specific reference signals, such as Channel State Information reference signals, CSI-RS, or- one or more cell search signals, such as Synchronization Signal Block, SSB, reference signals and one or more UE-specific reference signals, such as Channel State Information reference signals, CSI-RS, or- one or more downlink demodulation reference signals, such as DM-RS, relating to a downlink control channel, such as a Physical Downlink Control Channel, PDCCH.

1.2. claims: 6, 7

   Dependent claim 6 further defines that the measuring of the downlink reference signals comprises determining for each one of the downlink reference signals one quality metric, wherein the quality metric is one or more of:- a reference signal received power, RSRP, measurement value of the respective downlink reference signal, and- a signal to interference plus noise ratio, SINR, measurement value of the respective downlink reference signal.
   - - -

2. claims: 3-5, 8

   Dependent claim 3 further defines that the determining of the set of downlink reference signals is based on configuration information received from a base station, optionally wherein the configuration information is higher-layer configuration information, such as from a Radio

page 1 of 2

36

| | |
|---|---|
| Europäisches Patentamt European Patent Office Office européen des brevets | **LACK OF UNITY OF INVENTION** **SHEET B** |

**Application Number**

**EP 24 15 8399**

The Search Division considers that the present European patent application does not comply with the requirements of unity of invention and relates to several inventions or groups of inventions, namely:

Resource Control, RRC, protocol.

- - -

3. claim: 9

Dependent claim 9 further defines that the determining whether to initiate the beam management report procedure comprises determining to initiate the beam management report procedure when a trigger condition is fulfilled, wherein the trigger condition is one or more of:- in case the downlink signal reception quality is below a low-quality threshold,- in case the downlink signal reception quality is below a low-quality threshold for a minimum amount of time,- in case the downlink signal reception quality is below a low-quality threshold for a minimum number of times,- in case the downlink signal reception quality is below a low-quality threshold for a minimum number of times within a maximum amount of time,optionally wherein the processing circuitry, when in operation determines the low-quality threshold based on configuration information received from a base station or based on a capability of the UE.

- - -

4. claim: 10

Dependent claim 10 further defines that in case the processing circuitry determines to initiate the beam management report procedure, a transmitter, in operation, transmits a beam management report to a base station that comprises information for facilitating beam management at the base station,optionally wherein the beam management report comprises one or more of the following:- a flag indicating that the quality of the downlink signal reception is bad,- information about detected beams,- at least part of the measured downlink reference signals,- the determined downlink signal reception quality, and- an identification of a preferred beam,optionally wherein the beam management comprises one or more of beam adjustment and beam switching.

- - -

Please note that all inventions mentioned under item 1, although not necessarily linked by a common inventive concept, could be searched without effort justifying an additional fee.

page 2 of 2

37

## ANNEX TO THE EUROPEAN SEARCH REPORT
## ON EUROPEAN PATENT APPLICATION NO.

EP 24 15 8399

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | Publication date | Patent family member(s) | | Publication date |
|---|---|---|---|---|
| WO 2024033844 A1 | 15-02-2024 | NONE | | |
| US 2023032501 A1 | 02-02-2023 | CN | 112567639 A | 26-03-2021 |
| | | US | 2021281295 A1 | 09-09-2021 |
| | | US | 2023032501 A1 | 02-02-2023 |
| | | WO | 2020033860 A1 | 13-02-2020 |
| US 2022132517 A1 | 28-04-2022 | CN | 116349150 A | 27-06-2023 |
| | | EP | 4205300 A1 | 05-07-2023 |
| | | KR | 20230092920 A | 26-06-2023 |
| | | US | 2022132517 A1 | 28-04-2022 |
| | | US | 2023413314 A1 | 21-12-2023 |
| | | WO | 2022086293 A1 | 28-04-2022 |

EPO FORM P0459

For more details about this annex : see Official Journal of the European Patent Office, No. 12/82